(19) Europäisches Patentamt
European Patent Office
Office européen des brevets

(11) **EP 2 889 815 A1**

(12) **EUROPEAN PATENT APPLICATION**

(43) Date of publication:
01.07.2015 Bulletin 2015/27

(51) Int Cl.:
*G06Q 10/00* (2012.01)     *G06Q 30/02* (2012.01)

(21) Application number: 14397538.1

(22) Date of filing: 19.12.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 31.12.2013 FI 20136340

(71) Applicant: HappyOrNot Oy
33100 Tampere (FI)

(72) Inventors:
• Koljonen, Mikko
33720 Tampere (FI)
• Väänänen, Heikki
33580 Tampere (FI)

(74) Representative: Tampereen Patenttitoimisto Oy
Hermiankatu 1 B
33720 Tampere (FI)

(54) **Method and device for collecting reliable personal satisfaction information**

(57)     The invention relates to a method for measuring feedback by a feedback device, the method comprising receiving a plurality of feedback selections, on the basis of the selection of a selector switch for giving feedback, storing the plurality of feedback selections with time information of selections as feedback data, and determining a weighting factor for the plurality of feedback selec- tions on the basis of the feedback data. The invention further relates to an apparatus for performing the method and a data processing system for processing feedback data.

```
┌─────────────────────────────────┐
│   Receiving a plurality of       │ ⟋ 50
│   feedback selections, on the    │
│   basis of the selection of      │
│   a selector switch for giving   │
│   feedback                       │
└─────────────────────────────────┘
                 │
                 ▼
┌─────────────────────────────────┐
│   Storing said plurality of      │ ⟋ 51
│   feedback selections with time  │
│   information of selections as   │
│   feedback data                  │
└─────────────────────────────────┘
                 │
                 ▼
┌─────────────────────────────────┐
│   Determining a weighting factor │ ⟋ 52
│   for said plurality of feedback │
│   selections on the basis of     │
│   said feedback data             │
└─────────────────────────────────┘
```

Fig. 5

**Description**

Field of the invention

The present invention relates to an apparatus and a method for determining personal satisfaction more correctly. The invention also relates to a data processing system for processing personal satisfaction data.

Background

Real-time personal satisfaction data reflecting the fulfilment of a person's expectations, whether relating to customer satisfaction or employee satisfaction, is very important for firms and other actors. A low degree of employee satisfaction causes problems in production, decreases creativity, increases employee turnover and may in the service sector lead to poor customer service, degrading customer satisfaction. A low degree of customer satisfaction, in turn, decreases a firm's cash flow, increases the amount of data shared on poor experiences, and affects the loyalty of customers as customers of the firm, and since securing a new customer will require even five-fold resources compared with maintaining existing customers, it is expensive for the firm to lose customers. A happy customer is more inclined to recommend a product or service he/she has bought and is more likely to buy the same product or service again. For these reasons, it would be important for firms to obtain information about the degree of personal satisfaction and changes in it, to be able to improve it by developing measures. Also, the measurements should be taken in real time, because when asking afterwards, damage has usually already been caused or the subject or the situation for feedback can no longer be recalled so well; consequently, it does not suffice to monitor the degree of satisfaction, for example, once or twice a year.

By a stand-alone feedback device comprising selector switches for giving feedback, it is possible to measure and collect anonymous feedback data. By selecting one feedback switch, a feedback giver can give i.e. indicate his feedback, personal satisfaction or opinion, according to the selection made with the feedback switch.

Summary

It is an aim of the present invention to provide a solution to the drawbacks of methods, devices and systems for collecting feedback and to present a method, device and system for collecting more correct feedback i.e. personal satisfaction of feedback givers, which provide firms and other actors with a method measuring personal satisfaction reliably so that intentional manipulation of feedback data is taken into account. The invention is characterized in what will be presented in the independent claims, and the dependent claims relate to advantageous embodiments of the invention.

The invention is based on a stand-alone feedback device i.e. an indicator of satisfaction, measuring feedback in real time and comprising a user interface with one or more selector switches for giving feedback, for example, 1 to 10 selector switches, which can be selected by persons giving feedback on a subject for feedback, a memory, in which the device for giving feedback stores the feedback data comprising selections and time information, and a data transmission module for wireless communication by the feedback device. The feedback device collects data on the feedback received in its memory and transmits the data to a server in a wireless manner, for example, over wireless local area network (WLAN). The server determines weighting factors for selections (if not done by the feedback device) and calculates weighted selections on the basis of the weighting factors. The server parses the data and produces from the data a feedback report and transmits the report to the subscriber, for example, by email, or provides it to be readable via a www user interface. Furthermore, the feedback device comprises the possibility of remote login; that is, the device can be monitored and controlled by communication between the server and the device without going to the device. In other words, the feedback device can receive control messages, such as configuration or confirmation messages, from e.g. a service provider or a server, by means of its data transmission module.

According to a first aspect of the invention, there is provided a method comprising: receiving a plurality of feedback selections, on the basis of the selection of a selector switch for giving feedback, storing said plurality of feedback selections with time information of selections as feedback data, and determining a weighting factor for said plurality of feedback selections on the basis of said feedback data.

According to an embodiment, the tamper delay begins from a base selection, wherein the base selection is a received feedback selection received after a holding period. According to an embodiment, said weighting factor is between F0 to F1 if a feedback selection is made in a tamper delay, and F1 if a feedback selection is made out of the tamper delay, wherein F0 may be, for example, 0 and F1 may be, for example, 1. According to an embodiment, the weighting factor grows linearly or exponentially as a function of time from F0 to F1 in the tamper delay. According to an embodiment, the tamper delay is divided to parts, each having a different weighing factor. According to an embodiment, the method further comprises transmitting the feedback data by a feedback device to a server for determining a weighting factor for said plurality of feedback selections. According to an embodiment, the server is further arranged to determine weighted selections for said plurality of selection on the basis of determined weighting factors. The server may also parse the data comprising weighted selections and produce from the data a feedback report and transmit the report.

The invention further relates to an apparatus for performing the above mentioned method. Therefore, according to a second aspect of the invention, there is provided an apparatus comprising at least one processor, memory including computer program code, the memory and the computer program code configured to, with the at least one processor, cause the apparatus to perform at least the following: receive a plurality feedback selections with time information from a feedback device and determine a weighting factor for said plurality of feedback selections on the basis of said received feedback data and time information.

According to an embodiment, the tamper delay begins from a base selection, wherein the base selection is a received feedback selection received after a holding period. According to an embodiment, said weighting factor is between $F0$ to $F1$ if a feedback selection is made in a tamper delay, and $F1$ if a feedback selection is made out of the tamper delay. According to an embodiment, the weighting factor grows linearly as a function of time from 0 to 1 in the tamper delay. According to an embodiment, the tamper delay is divided to parts, each having a different weighing factor. According to an embodiment, the apparatus is further arranged to determine weighted selections for said plurality of selection on the basis of determined weighting factors.

According to a third aspect of the invention, there is provided a data processing system for processing feedback data. The data processing system comprises at least one feedback device, wherein the feedback device comprises at least one selector switch for receiving a plurality of feedback selections on the basis of the selection of a selector switch, a data transmission module and at least one processor, wherein the memory is further arranged to store the feedback data comprising said plurality of feedback selections with time information of selections in the memory of the feedback device, and a data transmission module for transmitting the feedback data with time information, and server comprising a data transmission module for receiving feedback data from at least one feedback device, a memory including computer program code, the memory and the computer program code configured to, with the at least one processor determine a weighting factor for said plurality of feedback selections on the basis of said received feedback data.

Description of the Drawings

In the following, various embodiments of the invention will be described in more detail with reference to the appended drawings, in which

Fig. 1        shows dependency of a weighting factor as a function of time according to an embodiment of the invention;

Fig. 2        shows dependency of a weighting factor as a function of time according to an embodiment of the invention;

Fig. 3a       shows dependency of a weighting factor as a function of time according to an embodiment of the invention;

Fig. 3b, c    show distribution and average value of weighted selections of fig. 3a according to an embodiment of the invention;

Fig. 4a       shows dependency of a weighting factor as a function of time according to an embodiment of the invention;

Fig. 4b, c    show distribution and average value of weighted selections of fig. 4a according to an embodiment of the invention; and

Fig. 5        shows a weighting method for selections according to an embodiment of the invention; and

Fig. 6        shows dependency of a weighting factor as a function of time according to an embodiment of the invention.

Description of Example Embodiments

The invention is based on a stand-alone feedback device i.e. an indicator of satisfaction measuring feedback in real time. Whereas, feedback measuring system comprises at least one stand-alone feedback device having an internal power source, and a server, for example a computer. The feedback device comprises a user interface with one or more selector switches for giving feedback, for example, 1 to 10 selector switches, which can be selected by persons giving feedback on a subject for feedback, a memory, in which the feedback device stores the data, and a data transmission module for wireless communication by the feedback device. The feedback device collects data on the feedback received in its memory and the idea is that each feedback giver (user) selects only one selector switch i.e. presses only once.

However, there may be cases where a feedback device receives more than one feedback from one feedback giver i.e. one feedback giver may make two or more selections at a time. The extra sequential feedbacks may have been given intentionally or unintentionally. The user may, for example, make two or more frequent selections by accident or "thrum" selector switches on purpose. In both of these cases, extra selection/s received after the first selection are needless and they may even skew the collected feedback data. The first selection may not be an absolute first selection of the feedback device on that day or month etc. On the contrary, it may just be some arbitrary selection that is not made too close to the previous selection i.e. it is not so called frequent selection. There may be a predetermined time period after a selection after which a following selection may be a base selection.

This skewing problem may be solved by setting a minimum interval between the selections of the selector switches, and more frequent selections will not be registered by the feedback device. However, in this solution it may be possible that there are several selections after the first one but these several selections after the first one will not be registered because the minimum interval between the successive selections in not exceeded even if there is a long time between the first and the last of these several selections and/or the first and the last selection and even selections between the first and the last can be made by different feedback givers. It may also skew the collected feedback data when selections which are made too close to the previous selection/s are not registered because it is possible that these selections are made by different feedback givers and they are valid.

Previously, absolute number of (registered) selections of each selection switch are counted so that each selection has a value of one. On the basis of counted selections an average value or distribution of selections can be calculated. However, the risk of skewing of the collected feedback data can be reduced by using a weighting factor for selections instead of the absolute number of (registered) selections. The weighting factor may be used for selections that are made within a tamper delay. If there is a predetermined time period after an arbitrary selection without any selections during that predetermined time period the following selection may be the base selection starting the tamper delay. The tamper delay begins from that base selection. This predetermined time period before the base selection may be called a holding period. Selections that are made during the tamper delay will not get full value i.e. value of one and selections that are made out of the tamper delay will get full value i.e. value of one, when selections are counted. The length of this tamper delay may be predetermined for a feedback device and/or server. The weighting factor is arranged to be lower near the base selection and higher farther from the base selection. The scale for the weighting factor may change in a linear fashion so that at the beginning of the tamper delay the weighting factor may be 0, in the middle of the tamper delay the weighting factor may be 0.5 and at the end of the tamper delay the weighting factor may be 1. It is also possible that the tamper delay is divided into parts, each having different weighting factor so that selections made within a certain part all have the same weighting factor. Number of parts can be freely selected so as the length of parts i.e. parts of one tamper delay may have different length. The tamper delay may be split, for example, in four so that the first period starting from the beginning of the tamper delay (after the base selection) has a weighting factor of 0,2, the second part has a weighting factor of 0,4, the third part has a weighting factor of 0,6, and the last part of the tamper delay has a weighting factor of 0,8. It is also possible to define weighting factors for the tamper delay by other method than by a method of a linear change or parts. Other possible scales for the weighting factor may be, for example, exponential change, logarithmic change or any other desired change. The idea is that the weighting factor is arranged lower near the base selection i.e. at the beginning of the tamper delay and higher farther from the base selection i.e. near the end of the tamper delay, because it is more likely that the feedback giver is the same person if the selection is made right after or temporally close to the base selection. For weighting factor calculation the feedback device may also collect time information of selections, just as time stamps, that is, the time of selecting the selector switch of selections and/or time differences between successive selections. Time information may be stored in the memory with selections which means that feedback data comprises information about each selection of a selector switch and time information. The weighting factors may be calculated by the feedback device collecting the feedback data or a server receiving the feedback data from the feedback device. In addition, weighted selections (selections multiplied by their weighting factors) may be calculated by the feedback device or the server. Weighted selections may be stored with time stamps in the memory of the feedback device (when calculated by it) or in the memory of the server (when calculated by it or when received this information from the feedback device). For example, if the bandwidth between the feedback device and the server is wide enough, the server may be used for calculating both weighting factors and weighted selections on the basis of feedback data collected by the feedback device.

The feedback device may collect feedback data in its memory and transmit the data to a server in a wireless manner, for example, over wireless local area network (WLAN) or any other wireless packet connection, such as Internet, text message, RFID, NFC, Bluetooth, mobile satellite communications or over any cellular data connection, for example, GPRS, 3G, or 4G connection or alternatively over wired connection. The feedback device may start collecting data, for example, after the previous transmission of feedback data or after a certain point of time. The feedback device may collect data on the feedback received until a predetermined moment of transmission or until it is collected a predetermined number of feedbacks. The server parses the data and produces from the data a feedback report and transmits the report to the subscriber, for example, by email, or provides it to be readable via a www user interface. Furthermore, the feedback device comprises the possibility of remote login; that is, the device can be monitored and controlled by communication between the server and the device without going to the device. In other words, the feedback device may receive control messages, such as configuration or confirmation messages, from e.g. a service provider or a server, by means of its data transmission module.

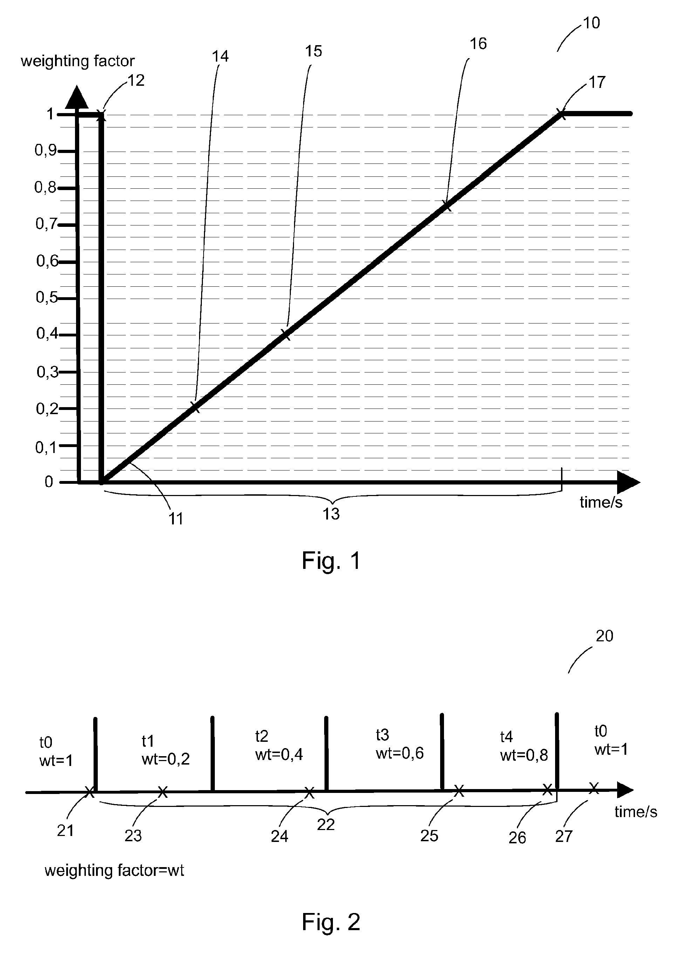

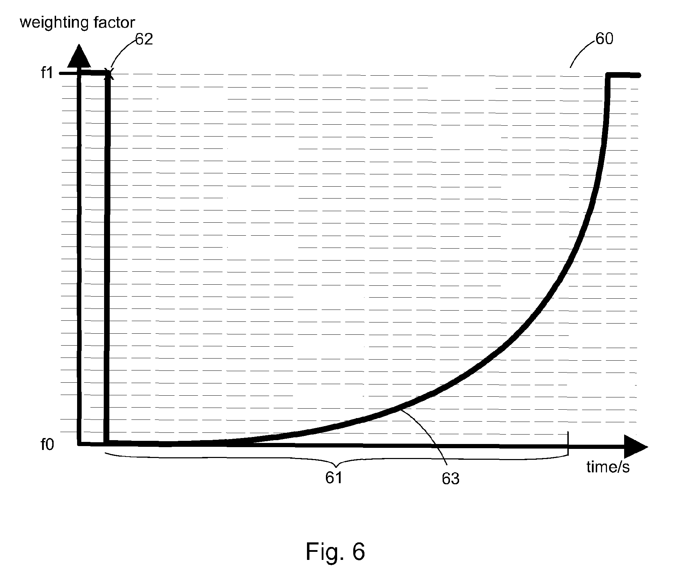

Figure 1 shows a diagram of dependency of a weighting factor for selections of a feedback device as a function of time 10 according to an embodiment of the invention. In this embodiment, it is defined how the weighting factor is determined during a tamper delay 13. The type of the selections is not specified in this embodiment. The weighting factor is time dependent and it grows linearly as a function of time after a feedback giver has made a selection 12. This selection 12 is a base selection and it starts the tamper delay 13. As shown in figure 1, the weighting factor graph 11 has value of 0 at the beginning of the tamper delay 13 i.e. right after the base selection 12 and value of 1 at the end of the tamper delay 13. In addition, the weighting factor graph 11 has value of 1 before and after the tamper delay 13. A cross 14 shows a time when a feedback giver has made his first selection after the base selection 12. The weighted value of that selection is 0,2*1=0,2. A cross 15 shows a time when a feedback giver has made the second selection. The weighted value of that selection is 0,4*1=0,4. A cross 16 shows a time when a feedback giver has made the third selection. The value of that selection is 0,75*1=0,75. A cross 17 shows a time when a feedback giver has made the last selection of shown time period. This selection is made after the end of the tamper delay 13. The weighted value of that selection is 1*1=1. It is possible, that the same feedback giver has made all these selections, 11, 14, 15, 16 and 17, but it is also possible that he has made only one of these selections 11, 14, 15, 16, 17 or part of these selections 11, 14, 15, 16, 17. Instead of values of weighting factor from 0 to 1, it is possible to use some other values, for example, 0 to 100. The starting point of the weighting value may be designated by F0 and ending point by F1 (shown in figure 6).

Figure 2 shows a diagram of changes of weighting factors of selections of a feedback device as a function of time 20 according to an embodiment of the invention. In addition, also in this embodiment, it is only defined how the weighting factor is determined, the type of the selection is not specified in this embodiment. A tamper delay 22 starts from a base selection 21 and the tamper delay 22 is divided to parts each having a different weighting factor. Period t0 represents time before and after the tamper delay 22, t1 is the first part of the tamper delay 22 and its weighting factor is 0,2, t2 is the second part of the tamper delay 22 and its weighting factor is 0,4, t3 is the third part of the tamper delay 22 and its weighting factor is 0,6 and t4 is the fourth part of the tamper delay 22 and its weighting factor is 0,8. Therefore, the base selection 21 that is made in the period t0 (wt=1) gets the total value of 1, the selection 23 made in part t1 (wt=0,2) gets the total value of 0,2 (wt*1), the selection 24 made in part t2 (wt=0,4) gets the total of 0,4, the selections 25 and 26 made in part t4 (wt=0,8) get the total values of 0,8 and the selection 27 made in part t0 (wt=1) gets the total value of 1. The weighting factors for parts of the tamper delay 22 can be freely defined, in addition, the amount of parts of the tamper delay 22 can be freely defined.

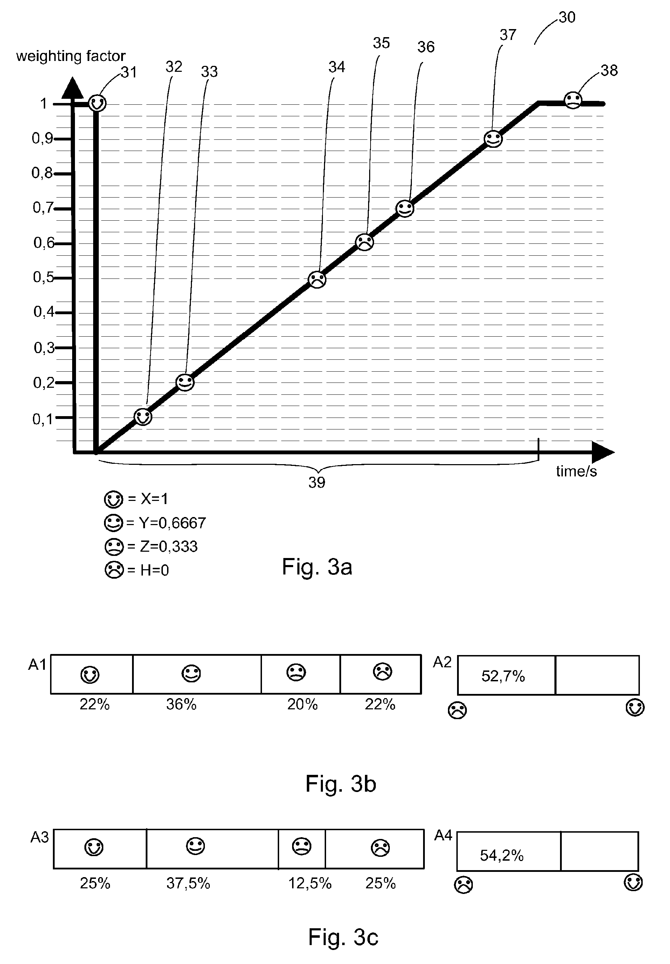

Figure 3a shows a diagram 30 of dependency of a weighting factor of selections of a feedback device as a function of time according to an embodiment of the invention. In this embodiment, it is defined how the weighting factor is determined, and also the type of the selection is taken into account. In this embodiment, the feedback device comprises four selection switches with different kind of faces each representing different type of selection. The types of selections made by feedback giver/s are shown by the faces in the diagram 30. It is also shown in figure 3a that the happiest face represents variable X, the less happiest face represents variable Y, the less doleful face represents variable Z and the most doleful face represents variable H, wherein X=1, y=0,667, Z=0,333 and H=0. These values may be used when calculated average value or distribution of selections.

| Reference number of selections | Type of selection | Weighting factor (wt) |
|---|---|---|
| 31 | X | 1 |
| 32 | X | 0,1 |
| 33 | Y | 0,2 |
| 34 | H | 0,5 |
| 35 | H | 0,6 |
| 36 | Y | 0,7 |
| 37 | Y | 0,9 |
| 38 | Z | 1 |

Figure 3b, shows distribution of selections in the time period shown in figure 3a, when weighting factors are taken into account. When weighting factor is used for selections, they may be called weighted selections and the weighted selections may have a value of weighting factor*1 instead of value of 1.

$X(wt)_{TOTAL}=(1+0,1)=1,1,$
$Y(wt)_{TOTAL}=(0,2+0,7+0,9)=1,8,$
$Z(wt)_{TOTAL}=1,$
$H(wt)_{TOTAL}=(0,5+0,6)=1,1,$
$XYZH(wt)_{TOTAL}=(1,1+1,8+1+1,1)=5,$

Percentage value of

$X(wt)selections=X(wt)_{TOTAL}/XYZH(wt)_{TOTAL}*100\%=22\%$
$X(wt)selections=X(wt)_{TOTAL}/XYZH(wt)_{TOTAL}*100\%=36\%$
$X(wt)selections=X(wt)_{TOTAL}/XYZH(wt)_{TOTAL}*100\%=22\%$
$H(wt)selections= H(wt)_{TOTAL}/XYZH(wt)_{TOTAL}*100\%=22\%$

These percentage values are shown as bar A1 in figure 3b.

The average value of selections=
$$X(wt)_{TOTAL}*X+Y(wt)_{TOTAL}*Y+Z(wt)_{TOTAL}*Z+H(wt)_{TOTAL}*H/$$
$$XYZH(wt)_{TOTAL} =$$
$$1,1*1+1,8*0,667+1*0,333+1,1*0/5=0,527$$

Therefore, the average percentage value is 0,527*100%=52,7% i.e. the average percentage value is a little closer to the X( 😃 )value than the H( 😃 )value. This is shown in bar A2 of figure 3b.
Figure 3c, shows distribution of selections in the time period shown in figure 3a, when weighting factors are not taken into account.
Number of selections:

$X_{TOTAL}=2$
$Y_{TOTAL}=3$
$Z_{TOTAL}=1$
$H_{TOTAL}=2$
$XYZH_{TOTAL}=(2+3+1+2)=8$

Percentage value of

$X selections= X_{TOTAL}/XYZH_{TOTAL}*100\%=25\%$
$Y selections= Y_{TOTAL}/XYZH_{TOTAL}*100\%=37,5\%$
$Z selections=Z_{TOTAL}/XYZH_{TOTAL}*100\%=12,5\%$
$H selections= H_{TOTAL}/XYZH_{TOTAL}*100\%=25\%$

These percentage values are shown as bar A3 in figure 3c.

The average value of selections=
$$X_{TOTAL}*X+Y_{TOTAL}*Y+Z_{TOTAL}*Z+H_{TOTAL}*H/XYZH_{TOTAL} =$$
$$2*1+3*0,667+1*0,333+2*0/8=0,542$$

Therefore, the average percentage value is 0,542*100%=54,2% i.e. the average percentage value is little closer the X( 😃 )value than H( 😞 )value. This is shown in bar A4 of figure 3c.
As can be seen from bars A1 and A2 of figure 3b and bars A3 and A4 of figure 3c, the results differs when weighting factors are used. Especially, the difference of percentage value of the variable Z (shown as 😞 in bars A1 and A3) should be noticed. When weighted values are taken into account, it forms 20% of the distribution of selections. Whereas, when only the number of selections are taken into account, the variable Z forms 12,5% of the distribution of selections.

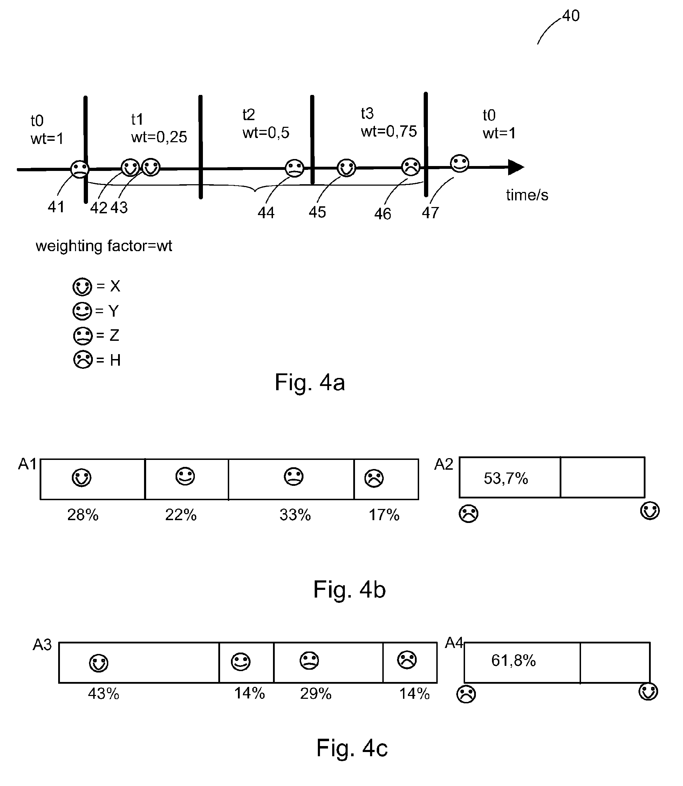

Figure 4a shows a diagram 40 of changes of a weighting factor of selections of a feedback device according to an embodiment of the invention. In this embodiment, it is defined how the weighting factor is determined, and also the type of the selection is taken into account. In this embodiment, the feedback device comprises four selection switches with different kind of faces each representing different type of selection. The types of selections made by a feedback giver/s are shown by the faces in figure 4a. It is also shown in figure 4a that the happiest face represents variable X, the less happiest face represents variable Y, the less doleful face represents variable Z and the most doleful face represents variable H, wherein X=1, y=0,667, Z=0,333 and H=0. These values may be used when calculated average value or distribution of selections. A tamper delay 42 starts from a base selection 41 and the tamper delay 42 is divided to three parts each having a different weighting factor. Period t0 represents time before and after the tamper delay 42, t1 is the first part of the tamper delay 42 and its weighting factor is 0,25, t2 is the second part of the tamper delay 42 and its weighting factor is 0,5 and t3 is the third part of the tamper delay 42 and its weighting factor is 0,75. Therefore, the base selection 41 that is made in the period t0 (wt=1) gets the total value of 1(wt*1), the selections 43 and 44 made in part t1 (wt=0,25) get the total value of 0,25 (wt*1), the selection 45 made in part t2 (wt=0,5) gets the total of 0,5, the selections 46 and 47 made in part t3 (wt=0,75) get the total values of 0,75 and the selection 48 made in part t0 (wt=1) gets the total value of 1.

| Reference number of selections | Type of selection | Weighting factor (wt) |
|---|---|---|
| 41 | Z | 1 |
| 42 | X | 0,25 |
| 43 | X | 0,25 |
| 44 | Z | 0,5 |
| 45 | X | 0,75 |
| 46 | H | 0,75 |
| 47 | Y | 1 |

Figure 4b, shows distribution of selections in the time period shown in figure 4a, when weighting factors are taken into account.

$$X(wt)_{TOTAL}=(0,25+0,25+0,75)=1,25,$$
$$Y(wt)_{TOTAL}=1=1,$$
$$Z(wt)_{TOTAL}=(1+0,5)=1,5,$$
$$H(wt)_{TOTAL}=0,75=0,75, \text{ and}$$
$$XYZH(wt)_{TOTAL}=(1,25+1+1,5+0,75)=4,5.$$

Percentage value of

$$X(wt)selections= X(wt)_{TOTAL}/XYZH(wt)_{TOTAL}*100\%=28\%,$$
$$X(wt)selections=X(wt)_{TOTAL}/XYZH(wt)_{TOTAL}*100\%=22\%$$
$$Z(wt)selections=Z(wt)_{TOTAL}/XYZH(wt)_{TOTAL}*100\%=33\%, \text{ and}$$
$$H(wt)selections= H(wt)_{TOTAL}/XYZH(wt)_{TOTAL}*100\%=17\%.$$

These percentage values are shown as bar A1 in figure 4b.

The average value of selections=
$$X(wt)_{TOTAL}*X+Y(wt)_{TOTAL}*Y+Z(wt)_{TOTAL}*Z+H(wt)_{TOTAL}*H/$$
$$XYZH(wt)_{TOTAL} =$$
$$1,25*1+1*0,667+1,5*0,333+0,75*0/4,5=0,537$$

Therefore, the average percentage value is 0,537*100%=53,7% i.e. the average percentage value is a little closer to the X( 🙂 )value than the H( 🙁 )value. This is shown in bar A2 of figure 3b.

Figure 4c, shows distribution of selections in the time period shown in figure 4a, when weighting factors are not taken into account.

Number of selections:

$X_{TOTAL}$=3,
$Y_{TOTAL}$=1,
$Z_{TOTAL}$=2,
$H_{TOTAL}$=1, and
$XYZH_{TOTAL}$=(3+1+2+1)=7.

Percentage value of

X selections= $X_{TOTAL}/XYZH_{TOTAL}$*100%=43%,
Y selections= $Y_{TOTAL}/XYZH_{TOTAL}$*100%=14%,
Z selections= $Z_{TOTAL}/XYZH_{TOTAL}$*100%=29%, and
H selections= $H_{TOTAL}/XYZH_{TOTAL}$*100%=14%.

These percentage values are shown as bar A3 in figure 4c.

$$\text{The average value of selections=}$$
$$X_{TOTAL}*X+Y_{TOTAL}*Y+Z_{TOTAL}*Z+H_{TOTAL}*H/XYZH_{TOTAL} =$$
$$3*1+1*0,667+2*0,333+1*0/7=0,618$$

Therefore, the average percentage value is 0,618*100%=61,8% i.e. the average percentage value is clearly closer to the X( 🙂 )value than the H( 🙁 )value. This is shown in bar A4 of figure 4c.

Again bars A1 and A2 of figure 4b and bars A3 and A4 of figure 4c differ. Especially, there is a big difference of average bars A2 and A4. When weighted values are taken into account, the average selection is more likely lower than when only absolute number of selections are taken into account. In addition, big difference of variable X (shown as 🙂 in bars A1 and A3) should be noticed

Although, in figures 1, 2, 3a and 4a only one tamper delay is disclosed, it is possible that there are several or plenty of time-adjacent tamper delays. A tamper delay can begin right after the previous tamper delay if a feedback giver makes a new base selection right after the end of the tamper delay or there could be a long gap between adjacent tamper delays if a new base selection is not made after the end of the previous tamper delay.

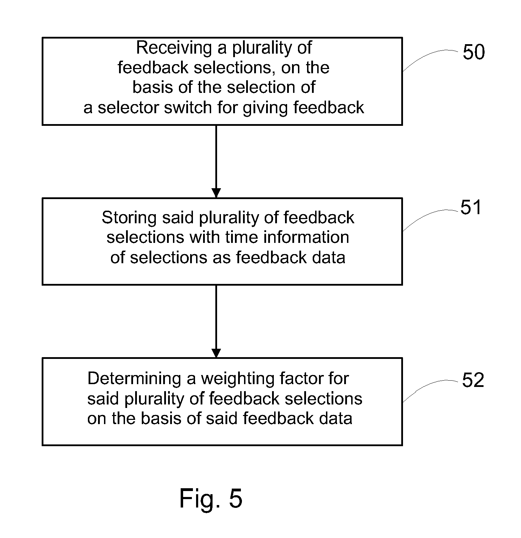

Figure 5 shows a flow chart of a weighting method according to an embodiment of the invention. In step 50, a plurality of feedback selections is received on the basis of the selection of a selector switch for giving feedback of a feedback device by the feedback device. In step 51, the plurality of feedback selections with time information of selections is stored as feedback data in the memory of the feedback device. The time information may be time stamp i.e. clock time when selection was made or it may be a time difference to a previous selection. In step 52, it is determined a weighting factor for said plurality of feedback selections on the basis of said feedback data. This determination may be done by the feedback device or it may be done by a server that receives that feedback data from the feedback device before determination of weighting factors.

Figure 6 shows a diagram of dependency of a weighting factor for selections of a feedback device as a function of time 60 according to an embodiment of the invention. In this embodiment, it is defined how the weighting factor is determined during a tamper delay 61. The weighting factor is time dependent and it grows exponentially as a function of time after a feedback giver has made a selection 62. This selection 62 is a base selection and it starts the tamper delay 61. As shown in figure 6, the weighting factor graph 63 has value of F0 at the beginning of the tamper delay 61 i.e. right after the base selection 62 and value of F1 at the end of the tamper delay 61. In addition, the weighting factor graph 63 has value of F1 before and after the tamper delay 61.

It should also be noted that the length of the tamper delay may depend on many things. One possible thing is the placement of the feedback device i.e. the environment of the feedback device. If the feedback device is placed in an environment where feedback givers exists at long intervals, for example, in a lawyer's office, reception of investment adviser, health center etc. the tamper delay may be long, for example, 30 seconds or 2 minutes. Whereas if the feedback device is placed in an environment where feedback givers exists at short intervals, for example, in a dining room, shop, airport, railway station etc. the tamper delay may be short, for example, 3 to 10 seconds. Length of the tamper delay of a feedback device may also vary in the same environment, for example, it may depend on time of the day or the day of the week or some other thing like an event happening in that environment. For example, the length of the tamper delay may be longer outside rush hours and shorter in rush hours when there are more feedback givers. In addition, the length of the tamper delay may be adjusted on the basis of number of received selections. For example, if the feedback device receives over a predetermined number of feedbacks in a unit of time the tamper delay may be arranged shorter and if the feedback device receives under a predetermined number of feedbacks in a unit of time the tamper delay may be arranged longer. In addition, the method used for defining weighting factors for selections of one feedback device can vary. It may also depend on same things than the length of the tamper delay.

Also the length of a holding period may depend on many things. One possible thing is the placement of the feedback device. If the feedback device is placed in an environment where feedback givers exists at long intervals, the holding period may be long, for example, 2 minutes. Whereas if the feedback device is placed in an environment where feedback givers exists at short intervals the holding period may be shorter, for example, under 1 minute. Length of the holding period of a feedback device may also vary in the same environment, for example, it may depend on time of the day or the day of the week or some other thing like an event happening in that environment. In addition, the length of the holding period may be adjusted on the basis of number of received selections. For example, if the feedback device receives over a predetermined number of feedbacks in a unit of time the holding period may be arranged shorter and if the feedback device receives under a predetermined number of feedbacks in a unit of time the holding period may be arranged longer. In addition, the length of the holding period may depend on same things than the length of the tamper delay.

Furthermore, there may exist a further highlight factor. The highlight factor may be used, for example, to highlight specific selection or selections, which selection/s interests the organizer of the survey. For example, if selection 1 is the specific selection all these selection may be multiplier by this highlight factor so that they can be easily noticed from feedback data that can be collected from several feedback devices by a server. The table for factors may be as follows, wherein selection 5 is the specific selection:

| Type of selection | Highlight factor (ht) |
|---|---|
| 1 | 1 |
| 2 | 1 |
| 3 | 1 |
| 4 | 1 |
| 5 | 2,5 |
| 6 | 1 |
| 7 | 1 |

The highlight factor may be used together with the weighting factor.

In addition, selector switches can be replaced by other means, according to the need: for example, by stepping onto a light pattern, by cutting a beam of light, by audio commands, etc.

It should be noted, that there may exists feedback devices comprising only one selector switch, which switch is arranged to be pressed i.e. selected if the feedback giver, for example, agrees with a question of the feedback device. Therefore, it is not always necessary to indicate selector switches with a type of the feedback. And in those cases, weighting factors are determined just for the selections, see embodiments of figures 1 and 2.

The various embodiments of the invention can be implemented with the help of computer program code that resides in a memory and causes the relevant apparatuses to carry out the invention. For example, a feedback device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment. By a method and apparatus according to invention it is possible to collect more correct personal satisfaction information i.e. feedback data.

In addition, the server may be so called learning system that controls feedbacks devices on the basis of earlier collected feedback data. It may, for example, adjust the length of tamper delay, choose suitable method for defining weighting factors etc. The controlling may be done, for example, by control messages.

However, the invention and its embodiments are not limited to those presented above, but the basic idea of the invention can be implemented in a variety of ways. Thus, the present invention is not limited solely to the above-presented embodiments, but it can be modified within the scope of the appended claims.

## Claims

1. A method for measuring feedback by means of a feedback device, the method comprising:

   receiving a plurality of feedback selections, on the basis of the selection of a selector switch for giving feedback; storing said plurality of feedback selections with time information of selections as feedback data; and determining a weighting factor for said plurality of feedback selections on the basis of said feedback data, wherein the weighting factor growing as a function of time is arranged to be lower at a beginning of a tamper delay and higher at the end of the tamper delay beginning from a base selection that is a received feedback selection received after a holding period, and wherein feedback selections that are made out of the tamper delay get full value.

2. A method according to claim 1, wherein said weighting factor is between F0 to F1 if a feedback selection is made in the tamper delay, and F1 if a feedback selection is made out of the tamper delay.

3. The method according to claim 2, wherein the weighting factor grows linearly or exponentially as a function of time from F0 to F1 in the tamper delay.

4. The method according to claim 2, wherein the tamper delay is divided to parts, each having a different weighing factor.

5. The method according to any of the claims 1 to 3, wherein the method further comprises transmitting the feedback data by a feedback device to a server for determining a weighting factor for said plurality of feedback selections.

6. The method according to any of the claims 1 to 5, wherein the server is further arranged to determine weighted selections for said plurality of selection on the basis of determined weighting factors.

7. An apparatus comprising at least one processor, memory including computer program code, the memory and the computer program code configured to, with the at least one processor, cause the apparatus to perform at least the following:

   receive a plurality feedback selections with time information from a feedback device; and determine a weighting factor for said plurality of feedback selections on the basis of said received feedback data and time information, wherein the weighting factor growing as a function of time is arranged to be lower at a beginning of a tamper delay and higher at the end of the tamper delay beginning from a base selection that is a received feedback selection received after a holding period, and wherein feedback selections that are made out of the tamper delay get full value.

8. The apparatus according to claim 7, wherein said weighting factor is between F0 to F1 if a feedback selection is made in the tamper delay, and F1 if a feedback selection is made out of the tamper delay.

9. The apparatus according to claim 8, wherein the weighting factor grows linearly as a function of time from 0 to 1 in the tamper delay.

10. The apparatus according to claim 8, wherein the tamper delay is divided to parts, each having a different weighing factor.

11. The apparatus according to any of the claims 7 to 10, wherein the apparatus is further arranged to determine weighted selections for said plurality of selection on the basis of determined weighting factors.

12. A data processing system for processing feedback data, the data processing system comprising:

   at least one feedback device, wherein the feedback device comprises at least one selector switch for receiving a plurality of feedback selections on the basis of the selection of a selector switch, a data transmission module and at least one processor, wherein the memory is further arranged to store the feedback data comprising said plurality of feedback selections with time information of selections in the memory of the feedback device, and a data transmission module for transmitting the feedback data with time information; and

a server comprising a data transmission module for receiving feedback data from at least one feedback device, a memory including computer program code, the memory and the computer program code configured to, with the at least one processor determine a weighting factor for said plurality of feedback selections on the basis of said received feedback data, wherein the weighting factor growing as a function of time is arranged to be lower at a beginning of a tamper delay and higher at the end of the tamper delay beginning from a base selection that is a received feedback selection received after a holding period, and wherein feedback selections that are made out of the tamper delay get full value.

Fig. 1

weighting factor=wt

Fig. 2

= X=1

= Y=0,6667

= Z=0,333

= H=0

Fig. 3a

Fig. 3b

Fig. 3c

_40

t0
wt=1

t1
wt=0,25

t2
wt=0,5

t3
wt=0,75

t0
wt=1

time/s

41    42 43              44    45      46    47

weighting factor=wt

☺ = X

☺ = Y

☹ = Z

☹ = H

Fig. 4a

A1

| ☺ | ☺ | ☹ | ☹ |
|-----|-----|-----|-----|
| 28% | 22% | 33% | 17% |

A2

| 53,7% | |
|-------|--|
| ☹ | ☺ |

Fig. 4b

A3

| ☺ | ☺ | ☹ | ☹ |
|-----|-----|-----|-----|
| 43% | 14% | 29% | 14% |

A4

| 61,8% | |
|-------|--|
| ☹ | ☺ |

Fig. 4c

```
┌─────────────────────────────────┐
│      Receiving a plurality of    │      ⟋ 50
│      feedback selections, on the │
│         basis of the selection of│
│  a selector switch for giving feedback│
└─────────────────────────────────┘
                 │
                 ▼
┌─────────────────────────────────┐
│    Storing said plurality of feedback │  ⟋ 51
│      selections with time information │
│       of selections as feedback data  │
└─────────────────────────────────┘
                 │
                 ▼
┌─────────────────────────────────┐
│    Determining a weighting factor for │  ⟋ 52
│    said plurality of feedback selections│
│      on the basis of said feedback data │
└─────────────────────────────────┘
```

Fig. 5

Fig. 6

Europäisches
Patentamt

European
Patent Office

Office européen
des brevets

# EUROPEAN SEARCH REPORT

**Application Number**

EP 14 39 7538

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/262462 A1 (TRYFON JASON [CA]) 14 October 2010 (2010-10-14) * paragraph [0027] - paragraph [0058]; figures 1-4 * | 1-12 | INV. G06Q10/00 G06Q30/02 |
| X | US 8 478 621 B1 (PLUMMER SHERRY [US] ET AL) 2 July 2013 (2013-07-02) * column 5 - column 6; figures 1-4 * | 1-12 | |
| X | US 2010/038416 A1 (CANORA DAVID [US]) 18 February 2010 (2010-02-18) * paragraph [0016] - paragraph [0043]; figures 1-4 * | 1-12 | |
| X | US 2011/258137 A1 (PASTA POORYA [IR]) 20 October 2011 (2011-10-20) * paragraph [0062] - paragraph [0101] * | 1-12 | |
| X | WO 2011/048273 A2 (HAPPYORNOT OY [FI]; LEVANIEMI VILLE [FI]; VAEAENAENEN HEIKKI [FI]) 28 April 2011 (2011-04-28) * page 10 - page 14; figures 2-5 * | 1-12 | TECHNICAL FIELDS SEARCHED (IPC) G06Q |
| X | US 2005/149382 A1 (FENNER JOHN D [US] ET AL) 7 July 2005 (2005-07-07) * paragraph [0047] - paragraph [0059]; figures 1-5D * | 1-12 | |
| X | EP 1 318 471 A2 (FUKUICOMP INC [JP]) 11 June 2003 (2003-06-11) * paragraph [0018] - paragraph [0038] * | 1-12 | |

The present search report has been drawn up for all claims

| Place of search | Date of completion of the search | Examiner |
|---|---|---|
| Munich | 6 May 2015 | Lavin Liermo, Jesus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 39 7538

This annex lists the patent family members relating to the patent documents cited in the above-mentioned European search report.
The members are as contained in the European Patent Office EDP file on
The European Patent Office is in no way liable for these particulars which are merely given for the purpose of information.

06-05-2015

| Patent document cited in search report | | Publication date | Patent family member(s) | | Publication date |
|---|---|---|---|---|---|
| US 2010262462 | A1 | 14-10-2010 | CA<br>EP<br>US<br>US<br>WO | 2758749 A1<br>2419870 A1<br>2010262462 A1<br>2014229237 A1<br>2010118505 A1 | 21-10-2010<br>22-02-2012<br>14-10-2010<br>14-08-2014<br>21-10-2010 |
| US 8478621 | B1 | 02-07-2013 | CA<br>US<br>US<br>US | 2829604 A1<br>8478621 B1<br>8682702 B1<br>2014100921 A1 | 08-04-2014<br>02-07-2013<br>25-03-2014<br>10-04-2014 |
| US 2010038416 | A1 | 18-02-2010 | NONE | | |
| US 2011258137 | A1 | 20-10-2011 | NONE | | |
| WO 2011048273 | A2 | 28-04-2011 | EP<br>FI<br>US<br>WO | 2497059 A2<br>20096093 A<br>2012208165 A1<br>2011048273 A2 | 12-09-2012<br>23-04-2011<br>16-08-2012<br>28-04-2011 |
| US 2005149382 | A1 | 07-07-2005 | NONE | | |
| EP 1318471 | A2 | 11-06-2003 | EP<br>JP<br>US | 1318471 A2<br>2003173385 A<br>2003105814 A1 | 11-06-2003<br>20-06-2003<br>05-06-2003 |

EPO FORM P0459

For more details about this annex : see Official Journal of the European Patent Office, No. 12/82